Europäisches Patentamt

European Patent Office

Office européen des brevets

(19)

(11) EP 0 899 900 A2

(12) EUROPEAN PATENT APPLICATION

(43) Date of publication:
03.03.1999 Bulletin 1999/09

(51) Int Cl.6: H04B 10/155

(21) Application number: 98440172.9

(22) Date of filing: 14.08.1998

(84) Designated Contracting States:
AT BE CH CY DE DK ES FI FR GB GR IE IT LI LU
MC NL PT SE
Designated Extension States:
AL LT LV MK RO SI

(30) Priority: 28.08.1997 DE 19737482

(71) Applicant: ALCATEL
75088 Paris (FR)

(72) Inventor: Bülow, Henning, Dr.
70597 Stuttgart (DE)

(74) Representative: Rausch, Gabriele, Dr. et al
c/o Alcatel Alsthom,
I.P.D.,
Postfach 30 09 29
70449 Stuttgart (DE)

(54) Verfahren zur optischen Übertragung über ein Lichtwellenleiternetz, sowie optischen Übertragungsnetz

(57) Es wird ein Verfahren zur optischen Übertragung über ein Lichtwellenleiternetz sowie ein optisches Übertragungsnetz vorgeschlagen, wobei die optischen Signale im Sender aus einem modulierten und einem Dauerstrichsignal bestehen, die im Empfänger zu einem Mischsignal mischen und die als Mischsignal über Korrelationsfilter ausgewertet werden.

Fig.1

## Beschreibung

Die Erfindung geht aus von einem Verfahren zur optischen Übertragung über ein Lichtwellenleiternetz sowie von einem optischen Übertragungsnetz nach der Gattung der unabhängigen Ansprüche.

Bei der Übertragung von optischen Impulsen über Glasfaserstrecken tritt der Effekt der chromatischen Dispersion auf. Wird beispielsweise ein Einzelbit mit einem optischen Impuls von 25 ps Dauer dargestellt, so verbreitert sich dieser Gaußimpuls nach 100 km Faserstrecke auf ca. 240 ps und weist zudem eine sich stetig ändernde optische Frequenz auf. Der Effekt der chromatischen Dispersion verfälscht den Informationsgehalt der zu übertragenden Daten und führt zu einer Limitierung der optischen Streckenlängen. Um trotz der chromatischen Dispersion große Übertragungsstrecken überwinden zu können und trotzdem noch auswertbare Signale im Empfänger zu empfangen, werden dispersionskompensierende optische Elemente eingesetzt. So ist zum Beispiel aus "2.4 GBit/s, 306-km repeaterless transmission ...", M. Kakui et al., OFC' 95 Technical Digest, Seite 149 bekannt, dispersionskompensierende Fasern zum Ausgleich der chromatischen Dispersion der Übertragungsstrecke einzusetzen.

Die dispersionskompensierenden optischen Elemente bündeln die auseinander gelaufenen Impulse des Datenstroms wieder auf die ursprünglichen Bitimpulse von 25 ps Halbwertsbreite und machen das Signal für die nachgeschaltete Fotodiode detektierbar. Die dispersionskompensierenden Elemente können als optische Korrelationsfilter aufgefaßt werden, welche die verzerrten Datenbits aus dem empfangenen Datenstrom herauskorrelieren.

Aus der Veröffentlichung "Optical PSK synchronous heterodyn detection ...", N. Takachio et al., IEEE Photonics Technology Letters, Vol. 4, No. 3, 1992, Seite 278 ist ein Verfahren zum Empfang von optischen Signalen bekannt, die eine chromatische Dispersion auf der Übertragungsstrecke erfahren haben. Dabei wird im Empfänger ein Heterodyn-Empfangsverfahren eingesetzt. Das empfangene optische Signal wird mit dem Licht eines lokalen Oszillators über einen Faserkoppler gemischt und von einem Empfänger detektiert. Problematisch bei einem solchen Heterodyn-Verfahren ist, daß sich die optischen Felder des lokalen Oszillators und des Eingangssignals nur dann optimal überlagern, wenn sie räumlich kohärent sind und gleiche Polarisation aufweisen. Schon geringe Störungen der Oszillatorfrequenz und/oder Abweichungen vom Datentakt vor allem bei Übertragungen mit hohen Datenraten führen dazu, daß dem Signal Störmodulationen überlagert werden, die eine weitere Auswertung unmöglich machen. Der große Vorteil des Heterodynempfangs ist allerdings, daß sowohl Amplitude als auch Phase des eingehenden optischen Signals auch im Photodiodensignal enthalten sind. Daher kann die Verzerrung durch die chromatische Dispersion mit einem linearen elektrischen Filter beseitigt werden. Dadurch läßt sich auch bei einer dispersionbehafteten Faser die Glasfaserübertragungsstrecke deutlich vergrößern.

Das erfindungsgemäße Verfahren zur optischen Übertragung über ein Lichtwellenleiternetz mit den kennzeichnenden Merkmalen des unabhängigen Anspruchs hat dem gegenüber den Vorteil, daß kein lokaler Oszillator im Empfänger notwendig ist, sondern daß durch Aussenden eines Dauerstrichlichtsignals zusätzlich zum modulierten Signal des Senders zwei mischbare kohärente Signale über dieselbe Übertragungsstrecke übertragen werden, die sich dann ohne die oben genannten Kohärenzprobleme in der Fotodiode des Empfängers mischen. Dadurch ist auf einfache Weise die Polarisations- und Frequenzanpassungsbedingung erfüllt.

Das erfindungsgemäße optische Übertragungsnetz mit den kennzeichnenden Merkmalen des unabhängigen Anspruchs hat den Vorteil, daß die Voraussetzung für das Heterodynempfangsverfahren durch eine Teilmodulation der Laserleistung erreicht wird, was auf einfache Art und Weise im Sender realisiert werden kann.

Durch die in den Unteransprüchen aufgeführten Maßnahmen sind vorteilhafte Weiterbildungen und Verbesserungen des in dem unabhängigen Anspruchs angegebenen optischen Übertragungsnetzes möglich. So ist es auf einfache Weise möglich, das Dauerstrichsignal durch eine Teilmodulation der Laserleistung mit einem der Laserdioden nachgeschalteten Modulator zu erzeugen.

Zur Auswertung des in der Fotodiode entstehenden Mischsignals ist es vorteilhaft, ein Korrelationsfilter einzusetzen, das an die Dispersion der Übertragungsstrecke angepaßt ist. Eine besonders einfache Realisierung des Korrelationsfilters ist mit einem transversalen elektronischen Filter gegeben, welches als "tapped delay line"- Struktur bekannt ist und als Korrelationsfilter dient.

Vorteilhafterweise wird das optische Übertragungsnetz für die Übertragung von Signalen, die als QAM-codierte Informationen moduliert werden, einzusetzen. Das optische Übertragungsnetz eignet sich ebenfalls optimal für die Übertragung von Multilevel-Signalen.

Mit dem erfindungsgemäßen Übertragungsverfahren lassen sich auch auf einfache Weise modulierte und unmodulierte Hochfrequenzsignale (Mikrowellensignale, Mikrowellenträger, analoge TV-Signale) übertragen und auswerten.

Ausführungsbeispiele der Erfindung sind in den Zeichnungen dargestellt und in der nachfolgenden Beschreibung näher erläutert. Es zeigt

Fig. 1    ein optisches Übertragungsnetz mit externem Modulator,

Fig. 2    ein optisches Übertragungsnetz mit Laserdiodenmodulator,

Fig. 3 die Übertragung eines Einzelpulses,

Fig. 4 die Übertragung eines Signalzugs und

Fig. 5 die Übertragungsfunktion eines angepaßten Filters.

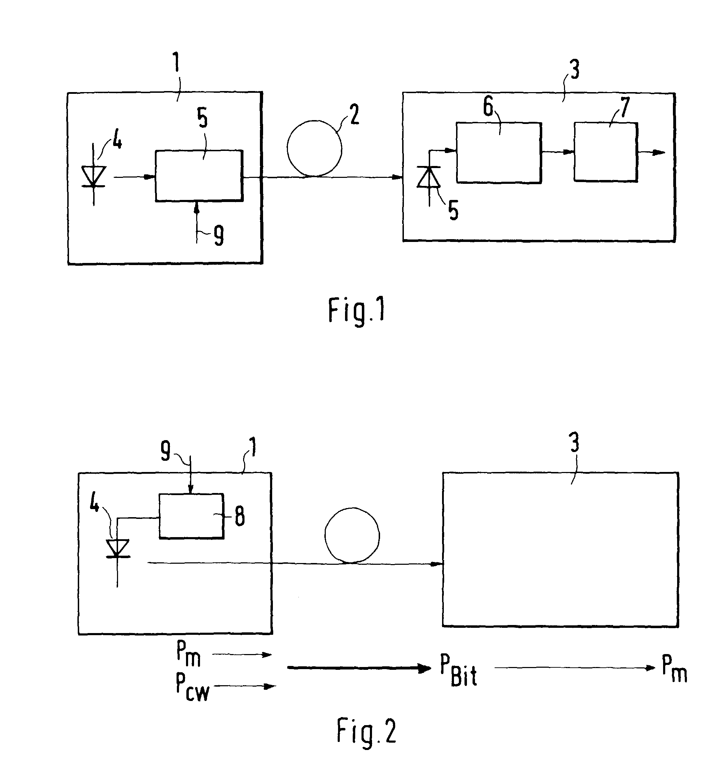

Fig. 1 zeigt ein optisches Übertragungsnetz bestehend aus einem Sender 1, der über eine Lichtleiterübertragungsstrecke 2 mit einem Empfänger 3 verbunden ist. Im Sender 1 befindet sich eine Laserdiode 4, deren Licht in einen externen Modulator 5 eingekoppelt wird, der von einem Modulationssignal 9 angesteuert wird und das Licht in Amplitude oder Phase moduliert. Der Empfänger enthält eine Fotodiode 5 mit einem nachgeschalteten Filter 6 und einer Entscheiderschaltung 7.
Die Entscheiderschaltung 7 ist bei der Übertragung von analogen Signalen entbehrlich.
Fig. 2 zeigt eine alternative Ausführungsform, bei der der Strom der Laserdiode 4 direkt von einem Strommodulator 8 mit dem Datenstrom 9 moduliert wird. Vom Sender 1 aus wird das Informationssignal als Summe aus moduliertem Signalanteil $P_m$ sowie Dauerstrichsignal $P_{cw}$ übertragen. Die beiden Signalanteile mischen im Empfänger an der Photodiode 5 zum Signal $P_{bit}$. Das im Empfänger enthaltene angepaßte Filter 6 sowie der Entscheider 7 werten das Eingangssignal $P_{bit}$ so aus, daß daraus das modulierte Signal $P_m$ und daraus der Datenstrom 9 rekonstruiert werden kann.

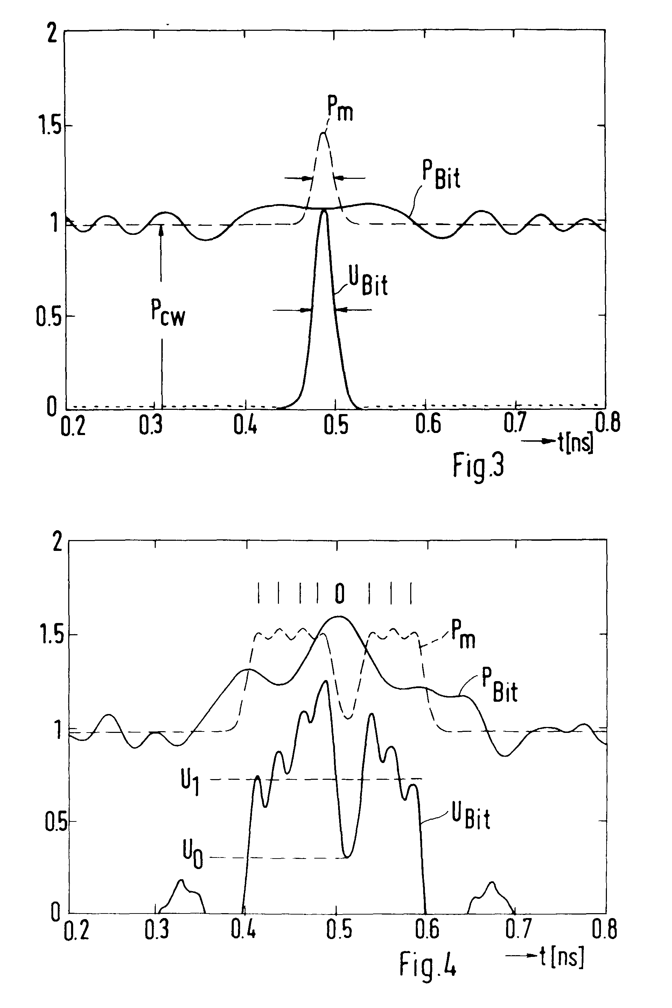

Fig. 3 zeigt das modulierte Signal $P_m$ mit einer Halbwertsbreite von 25 ps, das auf einem Offset-Signal, gebildet vom Signalanteil $P_{cw}$, sitzt. Diese beiden Signalanteile werden über die Übertragungsstrecke 2 übertragen und in der Fotodiode des Empfängers zum Signal $P_{bit}$ gemischt. Aufgabe des Korrelationsfilters ist es nun, aus dem modulierten Signal $P_{bit}$ wieder die einzelnen elektrischen Bitimpulse herauszukorrelieren und dem nachfolgenden Entscheider zur Verfügung zu stellen. Der theoretische Hintergrund für die Gestaltung von Korrelationsfiltern ist z.B. dem Lehrbuch "Signalübertragung-Grundlagen der digitalen und analogen Nachrichtenübertragungssysteme", Lücke, Springer Verlag 1992, Seite 133 ff zu entnehmen. Da das Korrelationsfilter für ein Eingangssignal mit einem Einzelbit einen 25 ps Ausgangsimpuls liefern soll, nämlich $U_{bit}$ in Fig. 3, ergibt sich eine Übertragungsfunktion des Filters H(f) aus den Quotienten der Fouriertransformierten von $U_{bit}$ und $P_{bit}$.

$$H(f) = F(U_{bit})/F(P_{bit})$$

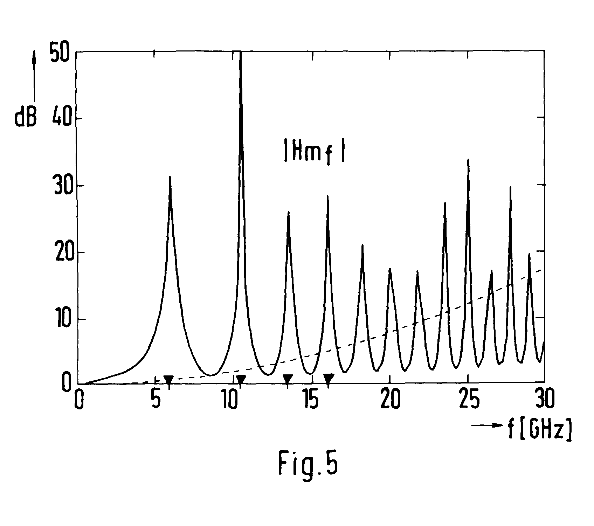

Die Funktion H(f) ist graphisch in Fig. 5 dargestellt.
Fig. 4 zeigt am Beispiel einer Signalfolge aus 1 1 1 101 11 die Funktion des Korrelationsfilters. Aus dem modulierten Signal $P_m$ entsteht in der Photodiode des Empfängers das Mischsignal $P_{bit}$. Das Korrelationsfilter 6 korreliert die Einzelbit zu der Funktion $U_{bit}$ heraus. Diese Funktion wird dem Entscheider 7 zugeführt, der zwischen den Schwellen $U_0$ und $U_1$ entscheidet. Man erkennt, daß mit den beiden Schwellwerten die Funktion $U_{bit}$ ausgewertet wird und die ursprünglich übertragene Signalfolge rekonstruiert werden kann. Lineare Filter als Korrelationsfilter sind beispielsweise aus der Veröffentlichung "Electrical Signal Processing Techniques in Long-Haul-Fiber-Optic Systems", Winters, IEEE Transaction on Communication, Vol. 38, No. 9, 1990, S. 1439, zu entnehmen. Dort werden die Probleme der unterschiedlichen Dispersionseffekte behandelt und verschiedene Filter zur Kompensation dieser Dispersionsform vorgeschlagen. Dabei wird besonders auf ein transversales Filter in einem "tapped delay line"-Aufbau nach Fig. 2 hingewiesen. Durch Einstellung verschiedener Verzögerungszeiten sowie Anpassung der aufzusummierenden Koeffizenten sind Korrelationsfilter herstellbar, die die gewünschte Übertragungsfunktion besitzen. Zudem lassen sich solche Filter adaptiv an Veränderungen der Übertragungsstrecke anpassen.
Die Methode zur Rückgewinnung der Dateninformation mithilfe von Korrelationsfiltern und Heterodyn-Detektion eröffnet die Möglichkeit, statt einer einfachen digitalen Modulationsart Modulationsarten mit höherer Bandbreiteneffizienz zu verwenden.
Verwendet man als Modulationsart eine Quadratur Amplitudenmodulation (QAM) beispielsweise auf einer Trägerfrequenz von 30 GHz, kann bei einer Datenrate von 80 Gbit/s die Bandbreite auf 20 GHz reduziert werden, im Vergleich zu 80 GHz Bandbreite bei einer einfachen digitalen Modulation. Die Erfordernisse eines guten Signal-Rausch-Verhältnisses werden durch die Heterodyn-Detektion mit Korrelation erfüllt.
Eine weitere vorteilhafte Modulationsart ist eine Multilevel-Modulation des Signals, wobei den einzelnen Informationsbits unterschiedliche Signalamplituden zugeordnet sind. Hierbei ist es ebenfalls wichtig, daß das im Empfänger empfangene Signal eindeutig ausgewertet werden kann. Übertragene Signale sind durch Dispersionseffekte ineinander verschmiert, können aber mit Heterodyn-Empfang und Korrelationstechnik ausgewertet werden.

**Patentansprüche**

1. Verfahren zur optischen Übertragung über ein Lichtwellenleiternetz, an das mindestens ein optischer Sender (1), eine Glasfaserübertragungsstrecke (2) und mindestens ein optischer Empfänger (3) angeschlossen ist, wobei im optischen Sender (1) Mittel (5) zum Modulieren des Lichts aufgrund eines Modulationssignals (9) vorhanden sind und der optische Empfänger(3) eine Photodiode (5) und ein elektronisches Filter (6) aufweist, dadurch gekennzeichnet, daß
im optischen Sender (1) ein Dauerstrichlichtsignal ($P_{cw}$) und eine moduliertes Signal ($P_m$) erzeugt werden und im optischen Empfänger (3) das Mischsignal ($P_{bit}$) aus moduliertem Signalanteil ($P_m$) und Dauerstrichlichtsignal ($P_{cw}$), ausgewertet wird.

2. Optisches Übertragungsnetz, an das mindestens ein optischer Sender (1) und, über eine Glasfaserübertragungsstrecke (2) verbunden, mindestens ein optischer Empfänger (3) angeschlossen ist, wobei im optischen Sender (1) Mittel (5, 8) zum Modulieren des Lichts aufgrund eines Modulationssignals (9) vorhanden sind und der optische Empfänger(3) eine Photodiode (5) und ein elektronisches Filter (6) aufweist, dadurch gekennzeichnet, daß im Sender (1) ein Strommodulator (8) für eine Laserdiode (4) vorhanden ist, die ein Dauerstrichsignal ($P_{cw}$) und einen modulierten Signalanteil ($P_m$) erzeugt, und daß im Empfänger (3) eine Auswerteschaltung (6 ) für das entstehende Mischsignal aus modulierten Signalanteil ($P_m$) und Dauerstrichlichtsignal ($P_{cw}$) vorhanden ist.

3. Optisches Übertragungsnetz, an das mindestens ein optischer Sender (1) und, über eine Glasfaserübertragungsstrecke (2) verbunden, mindestens ein optischer Empfänger (3) angeschlossen ist, wobei im optischen Sender (1) Mittel (5, 8) zum Modulieren des Lichts aufgrund eines Modulationssignals (9) vorhanden sind und der optische Empfänger(3) eine Photodiode (5) und ein elektronisches Filter (6) aufweist, dadurch gekennzeichnet, daß im Sender (1) ein der Laserdiode nachgeschalteter Modulator (5) vorhanden ist, der ein Dauerstrichsignal ($P_{cw}$) und ein modulierten Signalanteil ($P_m$) erzeugt, und daß im Empfänger (3) eine Auswerteschaltung (6) für das entstehende Mischsignal vorhanden ist.

4. Optisches Übertragungsnetz nach einem der vorhergehenden Ansprüche, dadurch gekennzeichnet, daß mindestens ein Korrelationsfilter (6) mit nachgeschaltetem Entscheider (7) im optischen Empfänger (3) das Mischsignal auswertet.

5. Optisches Übertragungsnetz nach einem der vorhergehenden Ansprüche, dadurch gekennzeichnet, daß das Korrelationsfilter (6) als transversales elektronisches Filter mit angepaßter Übertragungsfunktion ausgebildet ist.

6. Optisches Übertragungsnetz nach einem der vorhergehenden Ansprüche, dadurch gekennzeichnet, daß das Korrelationsfilter (6) als tapped delay line ausgebildet ist.

7. Optisches Übertragungsnetz nach einem der vorhergehenden Ansprüche, dadurch gekennzeichnet, daß im Sender (1) die zu übertragenden Daten dem Laserlicht als QAM-codierte Information auf einer Trägerfrequenz aufmoduliert werden.

8. Optisches Übertragungsnetz nach einem der vorhergehenden Ansprüche, dadurch gekennzeichnet, daß im Sender (1) die zu übertragenden Daten dem Laserlicht nach einem Multilevel-Signalschema aufmoduliert werden.

9. Optisches Übertragungsnetz nach einem der vorhergehenden Ansprüche, dadurch gekennzeichnet, daß das Modulationssignal (9) ein Datensignal oder ein moduliertes oder unmoduliertes Mikrowellensignal ist.

Fig.1

$P_m$ →
$P_{cw}$ →

$P_{Bit}$ → $P_m$

Fig.2

Fig.3

Fig.4

Fig.5